# NEUE EUROPÄISCHE PATENTSCHRIFT

(11) **EP 0 228 003 B2**
(45) Veröffentlichungstag und Bekanntmachung des Hinweises auf die Entscheidung über den Einspruch: **23.03.1994**
(45) Hinweis auf die Patenterteilung: 04.04.1990
(21) Anmeldenummer: 86117295.5
(22) Anmeldetag: 11.12.1986
(51) Int. Cl.: C08G 18/08, C08G 18/10, C09D 175/04, C08G 18/32, C08G 18/65, B05D 7/16

(54) **Verfahren zur Herstellung eines mehrschichtigen Ueberzuges**
Preparation of a multilayer coating
Préparation d'un revêtement multicouche

(30) Priorität: 21.12.1985 DE 3545618
(43) Veröffentlichungstag der Anmeldung: 08.07.1987
(73) Patentinhaber: BASF Lacke + Farben AG, 48165 Münster-Hiltrup (DE)
(72) Erfinder: Hille, Hans Dieter, D-5060 Bergisch-Gladbach (DE); Ebner, Franz, D-8702 Kist (DE); Drexler, Hermann-Josef, Dr., D-4402 Greven (DE)
(74) Vertreter: Münch, Volker, Dr.

(56) Entgegenhaltungen:
- EP-A- 0 022 452
- EP-A- 0 089 497
- EP-A- 0 148 970
- DE-A- 2 744 544
- US-A- 3 438 940
- US-A- 4 318 833
- US-A- 4 558 090

## Beschreibung

Die Erfindung betrifft ein Verfahren zur Herstellung eines mehrschichtigen, schützenden und/oder dekorativen Überzuges auf einer Substratoberflächen, bei welchem
(1) als Basisbeschichtungszusammensetzung eine wäßrige Dispersion aufgebracht wird, die
   a) als filmbildendes Material mindestens ein unvernetztes Polyurethanharz mit einer Säurezahl von 5 bis 70, welches hergestellt worden ist, indem aus
      (A) linearen Polyether- und/oder Polyesterdiolen mit einem Molekulargewicht von 400 bis 3000,
      (B) Diisocyanaten und
      (C) Verbindungen, die zwei gegenüber Isocyanatgruppen reaktive Gruppen enthalten, wobei zumindest ein Teil der als Komponente (C) eingesetzten Verbindungen mindestens eine zur Anionenbildung befähigte Gruppe aufweist, die vorzugsweise vor der Umsetzung mit einem tertiären Amin neutralisiert worden ist,
      ein endständige Isocyanatgruppen aufweisendes Zwischenprodukt hergestellt worden ist, dessen freie Isocyanatgruppen anschließend mit
      (D) weiteren, gegenüber Isocyanatgruppen reaktive Gruppen enthaltenden Verbindungen
      umgesetzt worden sind,
   b) Pigmente und
   c) weitere übliche Additive
   enthält,
(2) aus der in Stufe (1) aufgebrachten Zusammensetzung ein Polymerfilm auf der Oberfläche gebildet wird,
(3) auf der so erhaltenen Basisschicht eine geeignete transparente Deckschichtzusammensetzung aufgebracht und anschließend die Basisschicht zusammen mit der Deckschicht eingebrannt wird.

Insbesondere bei der Automobillackierung aber auch in anderen Bereichen, in denen man Überzüge mit guter dekorativer Wirkung und gleichzeitig einen guten Korrosionsschutz wünscht, ist es bekannt, Substrate mit mehreren, übereinander angeordneten Überzugsschichten zu versehen.

Mehrschichtlackierungen werden bevorzugt nach dem sogenannten "Basecoat-Clearcoat"-Verfahren aufgebracht, d.h. es wird ein pigmentierter Basislack vorlackiert und nach kurzer Ablüftzeit ohne Einbrennschritt (Naß-in-Naß-Verfahren) mit Klarlack überlackiert. Anschließend werden Basislack und Klarlack zusammen eingebrannt.

Besonders große Bedeutung hat das "Basecoat-Clearcoat" Verfahren bei der Applikation von Automobil-Metalleffektlacken erlangt.

Wirtschaftliche und ökologische Gründe haben dazu geführt, daß versucht wurde, bei der Herstellung von Mehrschichtüberzügen wäßrige Basisbeschichtungszusammensetzungen einzusetzen.

Überzugsmittel zur Herstellung von Basisschichten für mehrschichtige Automobillackierungen müssen nach dem heute üblichen rationellen "Naß-in-Naß"-Verfahren verarbeitbar sein, d.h. sie müssen nach einer möglichst kurzen Vortrockenzeit mit einer (transparenten) Deckschicht überlackiert werden können, ohne störende Anlöseerscheinungen zu zeigen.

Bei der Entwicklung von Überzugsmitteln für Basisschichten von Metall-Effektlacken müssen außerdem noch weitere Probleme gelöst werden. Der Metalleffekt hängt entscheidend von der Orientierung der Metall-Pigmentteilchen im Lackfilm ab. Ein im "Naß-in-Naß"-Verfahren verarbeitbarer Metalleffekt-Basislack muß demnach Lackfilme liefern, in denen die Metall-Pigmente nach der Applikation in einer günstigen räumlichen Orientierung vorliegen und in denen diese Orientierung schnell so fixiert wird, daß sie im Laufe des weiteren Lackierprozesses nicht gestört werden kann.

Bei der Entwicklung von wasserverdünnbaren Systemen, die die oben beschriebenen Forderungen erfüllen sollen, treten auf die besonderen physikalischen Eigenschaften des Wassers zurückzuführende, schwer zu lösende Probleme auf und bis heute sind nur wenige wasserverdünnbare Lacksysteme bekannt, die als Basisbeschichtungszusammensetzungen im oben dargelegten Sinne verwendet werden können.

So sind in der US-4,558,090 Überzugsmittel zur Herstellung der Basisschicht von Mehrschichtüberzügen offenbart, die aus einer wäßrigen Dispersion eines Polyurethanharzes mit einer Säurezahl von 5 - 70 bestehen. Die wäßrige Polyurethandispersion, die neben dem Bindemittel Pigmente und übliche Zusatzstoffe sowie gegebenenfalls noch weitere Bindemittelkomponenten enthalten kann, wird hergestellt durch Umsetzung
(A) eines linearen Polyether- und/oder Polyesterdiols mit endständigen Hydroxylgruppen und einem Molekulargewicht von 400 bis 3 000, mit
(B) einem Diisocyanat und
(C) einer Verbindung, die zwei gegenüber Isocyanatgruppen reaktive Gruppen und mindestens eine zur Anionenbildung befähigte Gruppe aufweist, wobei die zur Anionenbildung befähigte Gruppe vor der Umsetzung mit einem tertiären Amin neutralisiert worden ist
   zu einem Zwischenprodukt mit endständigen Isocyanatgruppen, Überführung des aus (A), (B) und (C) enthaltenen Zwischenprodukts in eine überwiegend wäßrige Phase und
(D) Umsetzung der noch vorhandenen Isocyanatgruppen mit einem Di- und/oder Polyamin mit primären und/oder sekundären Aminogruppen.

Die in der US 4,558,090 offenbarten Überzugsmitttel eignen sich gut zur Herstellung der Basisschicht von Mehrschichtüberzügen, sie sind aber für eine praktische Verwendung vor allem in Serienlackierprozessen ungeeignet, weil die schnell trocknenden Überzugsmittel in den zur Anwendung kommenden Applikationsgeräten (z.B. Lackspritzpistole; automatische, elektrostatisch unterstützte Hochrotationsanlagen u.s.w.) so gut haften, daß sie nur unter großen Schwierigkeiten wieder entfernt werden können. Dadurch ist ein vor allem in der Automobilserienlackierung sehr oft schnell durchzuführender Wechsel der applizierten Lacksysteme (z.B. Farbtonwechsel) nicht möglich.

Aufgabe der vorliegenden Erfindung war es daher, ein Verfahren zur Herstellung eines mehrschichtigen, schützenden und/oder dekorativen Überzuges auf einer Substratoberfläche zu entwickeln, mit dem alle oben dargelegten Forderungen erfüllt werden, ohne daß die oben beschriebenen Probleme auftreten.

Die Aufgabe konnte überraschenderweise durch ein Verfahren gemäß Oberbegriff des Anspruchs 1 gelöst werden, das dadurch gekennzeichnet ist, daß die die Basisbeschichtungszusammensetzung bildende Polyurethandispersion durch eine Umsetzung des aus (A), (B) und (C) erhaltenen Zwischenproduktes mit einem mindestens drei Hydroxylgruppen enthaltenden Polyol, vorzugsweise Triol, und Überführung des so gewonnenen Reaktionsproduktes in die wäßrige Phase hergestellt worden ist.

Es ist überraschend und war nicht vorhersehbar, daß die auf die an sich gewünschten Eigenschaften (schnelles Antrocknen des aufgebrachten Naßfilms, erschwertes Wiederanlösen des angetrockneten Films) zurückzuführenden Schwierigkeiten bei der Entfernung von in den Applikationsgeräten zurückgebliebenen Lackresten durch Verwendung der erfindungsgemäß einzusetzenden wäßrigen polyurethandispersion gelöst werden können und daß keine qualitative Einbußen in der fertiggestellten Mehrschichtlackierung in Kauf genommen werden müssen.

Die erfindungsgemäß eingesetzten Dispersionen werden erhalten, indem die Komponenten (A), (B) und (C) zu einem endständige Isocyanatgruppen aufweisenden Zwischenprodukt umgesetzt werden. Die Umsetzung der Komponenten (A), (B) und (C) erfolgt nach den gut bekannten Verfahren der organischen Chemie, wobei bevorzugt eine stufenweise Umsetzung der Komponenten (z.B. Bildung eines ersten Zwischenproduktes aus den Komponenten (A) und (B), das dann mit (C) zu einem zweiten Zwischenprodukt umgesetzt wird) durchgeführt wird. Es ist aber auch eine gleichzeitige Umsetzung der Komponenten (A), (B) und (C) möglich.

Die Umsetzung wird bevorzugt in Lösungsmitteln durchgeführt, die gegenüber Isocyanatgruppen inert und mit Wasser mischbar sind. Vorteilhaft werden Lösungsmittel eingesetzt, die neben den oben beschriebenen Eigenschaften auch noch gute Löser für die hergestellten Polyurethane sind und sich aus wäßrigen Mischungen leicht abtrennen lassen. Besonders gut geeignete Lösungsmittel sind Aceton und Methylethylketon.

Als Komponente (A) können prinzipiell alle bei der Herstellung von Beschichtungsmitteln auf Polyurethanbasis gebräuchlichen Diole eingesetzt werden. Geeignete Polyetherdiole entsprechen der allgemeinen Formel: 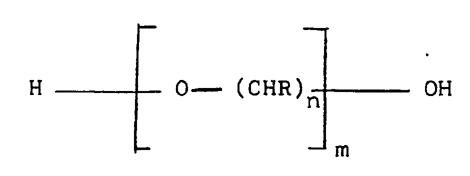
in der R = Wasserstoff oder ein niedriger Alkylrest, gegebenenfalls mit verschiedenen Substituenten, ist, n = 2 bis 6 und m = 10 bis 50 oder noch höher ist. Beispiele sind Poly(oxytetramethylen)glykole, Poly(oxyethylen)glykole und Poly(oxypropylen)glykole.

Die bevorzugten Polyalkylenetherpolyole sind Poly(oxypropylen)glykole mit einem Molekulargewicht im Bereich von 400 bis 3 000.

Polyesterdiole können ebenfalls als polymere Diolkomponente (Komponente A) bei der Erfindung verwendet werden. Man kann die Polyesterdiole durch Veresterung von organischen Dicarbonsäuren oder ihren Anhydriden mit organischen Diolen herstellen. Die Dicarbonsäuren und die Diole können aliphatische oder aromatische Dicarbonsäuren und Diole sein.

Die zur Herstellung der Polyester verwendeten Diole schließen Alkylenglykole wie Ethylenglykol, Butylenglykol, Neopentyglykol und andere Glykole wie Dimethylolcyclohexan ein.

Die Säurekomponente des Polyesters besteht in erster Linie aus niedermolekularen Dicarbonsäuren oder ihren Anhydriden mit 2 bis 18 Kohlenstoffatomen im Molekül.

Geeignete Säuren sind beispielsweise Phthalsäure, Isophthalsäure, Terephthalsäure, Tetrahydrophthalsäure, Hexahydrophthalsäure, Adipinsäure, Azelainsäure, Sebazinsäure, Maleinsäure, Glutarsäure, Hexachlorheptandicarbonsäure und Tetrachlorphthalsäure. Anstelle dieser Säuren können auch ihre Anhydride, soweit diese existieren, verwendet werden.

Ferner lassen sich bei der Erfindung auch Polyesterdiole, die sich von Lactonen ableiten, als Komponente (A) benutzen. Diese Produkte erhält man beispielsweise durch die Umsetzung eines ε-Caprolactons mit einem Diol. Solche Produkte sind in der US-PS 3 169 945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel 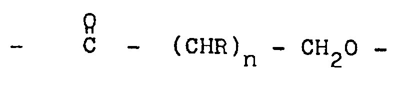
entsprechen, in der n bevorzugt 4 bis 6 ist und der Substituent Wasserstoff, ein Alkylrest, ein Cycloalkylrest oder ein Alkoxyrest ist, wobei kein Substituent mehr als 12 Kohlenstoffatome enthält und die gesamte Anzahl der Kohlenstoffatome in den Substituenten in dem Lactonring 12 nicht übersteigt.

Das als Ausgangsmaterial verwendete Lacton kann ein beliebiges Lacton oder eine beliebige Kombination von Lactonen sein, wobei dieses Lacton mindestens 6 Kohlenstoffatome in dem Ring enthalten sollte, zum Beispiel 6 bis 8 Kohlenstoffatome und wobei mindestens 2 Wasserstoffsubstituenten an dem Kohlenstoffatom vorhanden sein sollten, das an die Sauerstoffgruppe des Rings gebunden ist. Das als Ausgangsmatenal verwendete Lacton kann durch die folgende allgemeine Formel dargestellt werden. 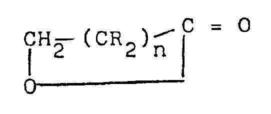
in der n und R die bereits angegebene Bedeutung haben.

Die bei der Erfindung für die Herstellung der Polyesterdiole bevorzugten Lactone sind die Caprolactone, bei denen n den Wert 4 hat. Das am meisten bevorzugte Lacton ist das unsubstituierte ε-Caprolacton, bei dem n den Wert 4 hat und alle R-Substituenten Wasserstoff sind. Dieses Lacton wird besonders bevorzugt, da es in großen Mengen zur Verfügung steht und Überzüge mit ausgezeichneten Eigenschaften ergibt. Außerdem können verschiedene andere Lactone einzeln oder in Kombination benutzt werden.

Beispiele von für die Umsetzung mit dem Lacton geeigneten aliphatischen Diolen schließen ein Ethylenglykol, 1,3-Propandiol, 1,4-Butandiol und Dimethylolcyclohexan.

Als Komponente (B) können für die Herstellung der Polyurethandispersion beliebige organische Diisocyanate eingesetzt werden. Beispiele von geeigneten Diisocyanaten sind Trimethylendiisocyanat, Tetramethylendiisocyanat, Pentamethylendiisocyanat, Hexamethylendiisocyanat, Propylendiisocyanat, Ethylethylendiisocyanat , 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4'-Biphenylendiisocyanat, 1,5-Naphthylendiisocyanat, 1,4-Naphthylendiisocyanat, 1-Isocyanatomethyl-5-isocyanato-1,3,3-trimethylcyclohexan, Bis-(4-isocyanatocyclohexyl)methan, Bis-(4-isocyanatophenyl)-methan, 4,4'-Diisocyanatodiphenylether und 2,3-Bis-(8-isocyanatooctyl)-4-octyl-5-hexylcyclohexen.

Als Komponente (C) werden Verbindungen eingesetzt, die zwei gegenüber Isocyanatgruppen reaktive Gruppen enthalten, wobei zumindest ein Teil der als Komponente (C) eingesetzten Verbindungen mindestens eine zur Anionenbildung befähigte Gruppe aufweist, die vorzugsweise vor der Umsetzung mit einem tertiären Amin neutralisiert worden ist.

Durch Einstellung eines bestimmten Mischungsverhältnisses zwischen den zur Anionenbildung befähigten Gruppen enthaltenden und den von diesen Gruppen freien Verbindungen kann der Anteil an ionischen Gruppen im Polyurethanmolekül gesteuert werden.

Geeignete mit Isocyanatgruppen reagierende Gruppen sind insbesondere Hydroxylgruppen. Die Verwendung von Verbindungen, die primäre oder sekundäre Aminogruppen enthalten, kann einen negativen Einfluß auf die oben beschriebene Verarbeitbarkeit der Dispersionen haben. Art und Menge von gegebenenfalls einzusetzenden aminogruppenhaltigen Verbindungen sind vom Durchschnittsfachmann durch einfach durchzuführende Routineuntersuchungen zu ermitteln.

Als zur Anionenbildung befähigte Gruppen kommen vor allem Carboxyl- und Sulfonsäuregruppen in Betracht. Diese Gruppen können vor der Umsetzung mit einem tertiären Amin neutralisiert werden, um eine Reaktion mit den Isocyanatgruppen zu vermeiden.

Als Verbindung, die mindestens zwei mit Isocyanatgruppen reagierende Gruppen und mindestens eine zur Anionenbildung befähigte Gruppe enthält, sind beispielsweise Dihydroxypropionsäure, Dimethylolpropionsäure, Dihydroxybemsteinsäure oder Dihydroxybenzoesäure geeignet. Geeignet sind auch die durch Oxydation von Monosacchariden zugänglichen Polyhydroxysäuren, z.B. Glukonsäure, Zuckersäure, Schleimsäure und Glukuronsäure. Aminogruppenhaltige Verbindungen sind beispielsweise α,δ-Diaminovaleriansäure, 3,4-Diaminobenzoesäure, 2,4-Diamino-toluol-sulfonsäure-(5) und 4,4'-Diamino-diphenylethersulfonsäure.

Geeignete tertiäre Amine zur Neutralisation der anionischen Gruppen sind beispielsweise Trimethylamin Triethylamin, Dimethylanilin, Diethylanilin und Triphenylamin.

Als Verbindungen, die zwei gegenüber Isocyanatgruppen reaktive Gruppen aufweisen, jedoch frei von zur Anionenbildung befähigten Gruppen sind, können beispielsweise niedermolekulare Diole oder Diamine mit primären oder sekundären Aminogruppen eingesetzt werden.

Das aus (A), (B) und (C) gebildete isocyanatgruppenhaltige Zwischenprodukt wird mit dem mindestens drei Hydroxylgruppen enthaltenden Polyol umgesetzt, was höchstwahrscheinlich eine Kettenverlängerung und gegebenenfalls auch eine Verzweigung des Bindemittelmoleküls zur Folge hat.

Bei dieser Umsetzung muß sorgfältig darauf geachtet werden, daß keine vemetzten Produkte erhalten werden.

Das kann zum Beispiel durch Zugabe einer auf den Isocyanatgruppengehalt des aus (A), (B) und (C) erhaltenen Zwischenproduktes und die Reaktionsbedingungen abgestimmten Menge an Polyol erreicht werden.

Im Prinzip sind alle mindestens drei Hydroxylgruppen enthaltenden Polyole, die mit dem aus (A), (B) und (C) erhaltenen Zwischenprodukt so umgesetzt werden können, daß keine vernetzten Produkte entstehen, zur Herstellung der erfindungsgemäß zu verwendenden Polyurethandispersion geeignet. Als Beispiele seien Trimethylolpropan, Glycerin, Erythrit, Mesoerythrit, Arabit, Adonit, Xylit, Mannit, Sorbit, Dulcit, Hexantriol und (Poly)-Pentaerythritol genannt.

Ganz besonders gute Ergebnisse können erzielt werden, wenn Trimethylolpropan als Polyol eingesetzt wird.

Nach der Umsetzung des aus (A), (B) und (C) erhaltenen Zwischenproduktes mit der Polyolkomponente, die vorzugsweise in einem gegenüber Isocyanatgruppen inerten, mit Wasser mischbaren, das entstehende Polyurethan gut lösenden und aus wäßrigen Mischungen gut abtrennbaren Lösungsmitteln (z.B. Aceton oder Methylethyl - keton) durchgeführt worden ist, und der gegebenenfalls noch durchzuführenden Neutralisierung der zur Anionenbildung befähigten Gruppen wird das Reaktionsprodukt in eine wäßrige Phase überführt. Das kann zum Beispiel durch Dispergierung des Reaktionsgemisches in Wasser und Abdestillieren der unter 100 °C siedenden organischen Lösungsmittelanteile geschehen.

Unter wäßriger Phase ist Wasser, das auch noch organische Lösungsmittel enthalten kann, zu verstehen. Als Beispiele für Lösungsmittel, die im Wasser vorhanden sein können, seien heterocyklische, aliphatische oder aromatische Kohlenwasserstoffe, ein- oder mehrwertige Alkohole, Ether, Ester und Ketone, wie zum Beispiel N-Methylpyrrolidon, Toluol, Xylol, Butanol, Ethyl- und Butylglykol sowie deren Acetate, Butyldiglycol, Ethylenglykoldibutylether, Ethylenglykoldiethylether, Diethylenglykoldimethylether, Cyclohexanon, Methylethylketon, Aceton, Isophoron oder Mischungen davon genannt.

Nachdem der pH-Wert der resultierenden Polyurethandispersion kontrolliert und gegebenenfalls auf einen Wert zwischen 6 und 9 eingestellt worden ist, bildet die Dispersion die Grundlage der erfindungsgemäß eingesetzten Überzugsmittel, in die die übrigen Bestandteile wie z.B. zusätzliche Bindemittel, Pigmente, organische Lösungsmittel und Hilfsstoffe durch Dispergieren beispielsweise mittels eines Rührers oder Dissolvers homogen eingearbeitet werden. Abschließend wird erneut der pH-Wert kontrolliert und gegebenenfalls auf einen Wert von 6 bis 9, vorzugsweise 7,0 bis 8,5 eingestellt. Weiterhin werden der Festkörpergehalt und die Viskosität auf die an die jeweiligen Applikationsbedingungen angepaßten Werte eingestellt.

Die gebrauchsfertigen Überzugsmittel weisen in der Regel einen Festkörperanteil von 10 bis 30 Gew.-% auf, und ihre Auslaufzeit im ISO-Becher 4 beträgt 15 bis 30 Sekunden, vorzugsweise 18 bis 25 Sekunden. Ihr Anteil an Wasser beträgt 60 bis 90 Gew.-%, der an organischen Lösungsmitteln 0 bis 20 Gew.-%, jeweils bezogen auf das gesamte Überzugsmittel.

Die vorteilhaften Wirkungen des erfindungsgemäßen Verfahrens sind auf den Einsatz der oben beschriebenen wäßrigen Polyurethandispersion zurückzuführen.

In vielen Fällen ist es wünschenswert, die Eigenschaften der erhaltenen Überzüge durch Mitverwendung weiterer Bindemittelsysteme in der Basis-Beschichtungszusammensetzung gezielt zu verbessern.

Die erfindungsgemäß eingesetzten Basis-Beschichtungszusammensetzungen enthalten vorteilhaft als zusätzliche Bindemittelkomponente ein wasserverdünnbares Melaminharz in einem Anteil von 1 bis 80 Gew.-%, bevorzugt 20 bis 60 Gew.-%, bezogen auf den Festkörpergehalt der Polyurethandispersion.

Wasserlösliche Melaminharze sind an sich bekannt und. werden in größerem Umfang eingesetzt. Es handelt sich hierbei um veretherte Melamin-Formaldehyd-Kondensationsprodukte. Ihre Wasserlöslichkeit hängt abgesehen vom Kondensationsgrad, der möglichst niedrig sein soll, von der Veretherungskomponente ab, wobei nur die niedrigsten Glieder der Alkanol- bzw. Ethylenglykolmonoetherreihe wasserlösliche Kondensate ergeben. Die größte Bedeutung haben die Hexamethoxymethylmelaminharze. Bei Verwendung von Lösungsvermittlern können auch butanolveretherte Melaminharze in wäßriger Phase dispergiert werden.

Es besteht auch die Möglichkeit, Carboxylgruppen in das Kondensat einzufügen. Umetherungsprodukte hochveretherter Formaldehydkondensate mit Oxycarbonsäuren sind über ihre Carboxylgruppe nach Neutralisation wasserlöslich und könne als Vernetzerkomponente in den erfindungsgemäßen Überzugsmitteln eingesetzt werden.

Anstelle der beschriebenen Melaminharze können auch andere wasserlösliche oder wasserdispergierbare Aminoharze wie z.B. Benzoguanaminharze eingesetzt werden.

Für den Fall, daß die erfindungsgemäß eingesetzte Basisbeschichtungszusammensetzung ein Melaminharz enthält, kann sie vorteilhaft zusätzlich als weitere Bindemittelkomponente ein wasserverdünnbares Polyesterharz und/oder ein wasserverdünnbares Polyacrylatharz enthalten, wobei das Gewichtsverhältnis Melaminharz : Polyester-/Polyacrylatharz 2:1 bis 1:4 beträgt und der Gesamtanteil an Melaminharz, Polyester-/Polyacrylatharz, bezogen auf den Festkörpergehalt der Polyurethandispersion 1 bis 80 Gew.-%, bevorzugt 20 bis 60 Gew.-% beträgt.

Wasserverdünnbare Polyester sind solche mit freien Carboxylgruppen, d.h. Polyester mit hoher Säurezahl.

Es sind grundsätzlich zwei Methoden bekannt, die benötigten Carboxylgruppen in das Harzsystem einzufügen. Der erste Weg besteht darin, die Veresterung bei der gewünschten Säurezahl abzubrechen. Nach Neutralisation mit Basen sind die so erhaltenen Polyester in Wasser löslich und verfilmen beim Einbrennen. Die zweite Möglichkeit besteht in der Bildung partieller Ester von Di- oder Polycarbonsäuren mit hydroxylreichen Polyestern mit niedriger Säurezahl. Für diese Reaktion werden üblicherweise Anhydride der Dicarbonsäuren herangezogen, welche unter milden Bedingungen unter Ausbildung einer freien Carboxylgruppe mit der Hydroxylkomponente umgesetzt werden.

Die wasserverdünnbaren Polyacrylatharze enthalten ebenso wie die oben beschriebenen Polyesterharze freie Carboxylgruppen. Es handelt sich in der Regel um Acryl- bzw. Methacrylcopolymerisate, und die Carboxylgruppen stammen aus den Anteilen an Acryl- oder Methacrylsäure.

Als Vernetzungsmittel können auch blockierte Polyisocyanate eingesetzt werden. Es können bei der Erfindung beliebige Polyisocyanate benutzt werden, bei denen die Isocyanatgruppen mit einer Verbindung umgesetzt worden sind, so daß das gebildete blockierte Polyisocyanat gegenüber Hydroxylgruppen bei Raumtemperaturen beständig ist, bei erhöhten Temperaturen, in der Regel im Bereich von etwa 90 bis 300 °C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis etwa 36, insbesondere etwa 8 bis 15 Kohlenstoffatome enthalten. Beispiele von geeigneten Diisocyanaten sind die oben genannten Diisocyanate (Komponente B).
Es können auch Polyisocyanate von höherer Isocyanatfunktionalität verwendet werden. Beispiele dafür sind Tris-(4-isocyanatophenyl)-methan, 1,3,5-Triisocyanatobenzol, 2,4,6-Triisocyanatotoluol, 1,3,5-Tris-(6-isocyanatohexyl)-biuret. Bis-(2,5-diisocyanato-4-methylphenyl)-methan und polymere Polyisocyanate, wie Dimere und Trimere von Diisocyanatotoluol. Ferner kann man auch Mischungen von Polyisocyanaten benutzen.

Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten. Dazu werden bekanntlich Polyole mit einem Überschuß von Polyisocyanaten umgesetzt, wodurch Präpolymere mit endständigen Isocyanatgruppen entstehen. Beispiele von Polyolen, die hierfür verwendet werden können, sind einfache Polyole, wie Glykole, z.B. Ethylenglykol und Propylenglykol, und andere Polyole, wie Glycerin, Trimethylolpropan, Hexantriol und Pentaerythrit; ferner Monoether, wie Diethylenglykol und Dipropylenglykol sowie Polyether, die Addukte aus solchen Polyolen und Alkylenoxiden sind. Beispiele von Alkylenoxiden, die sich für eine Polyaddition an diese Polyole unter Bildung von Polyethern eignen, sind Ethylenoxid, Propylenoxid, Butylenoxid und Styroloxid. Man bezeichnet diese Polyadditionsprodukte im allgemeinen als Polyether mit endständigen Hydroxylgruppen. Sie können linear oder verzweigt sein. Beispiele von solchen Polyethern sind Polyoxyethylenglykol von einem Molekulargewicht von 1 540, Polyoxypropylenglykol mit einem Molekulargewicht von 1 025, Polyoxytetramethylenglykol, Polyoxyhexamethylenglykol, Polyoxynonamethylenglykol, Polyoxydecamethylenglykol, Polyoxydodecamethylenglykol und Mischungen davon. Andere Typen von Polyoxyalkylenglykolethern können ebenfalls verwendet werden. Besonders geeignete Polyetherpolyole sind diejenigen, die man erhält durch Umsetzung von derartigen Polyolen, wie Ethylenglykol, Diethylenglykol, Triethylenglykol, 1,4-Butandiol, 1,3-Butandiol, 1,6-Hexandiol und Mischungen davon; Glycerin, Trimethylolethan, Trimethylolpropan, 1,2,6-Hexantriol, Dipentaerythrit, Tripentaerythrit, Polypentaerythrit, Methylglukosiden und Saccharose mit Alkylenoxiden, wie Ethylenoxid, Propylenoxid oder Mischungen davon.

Für die Blockierung der Polyisocyanate können beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Laurylalkohol; aromatische Alkylalkohole, wie Phenylcarbinol und Methylphenylcarbinol. Es können auch geringe Anteile an höhermolekularen und relativ schwer flüchtigen Monoalkoholen gegebenenfalls mitverwendet werden, wobei diese Alkohole nach ihrer Abspaltung als Weichmacher in den Überzügen wirken.
Andere geeignete Blockierungsmittel sind Oxime, wie Methylethylketonoxim, Acetonoxim und Cyclohexanonoxim, sowie auch Caprolactame, Phenole und Hydroxamsäureester. Bevorzugte Blockierungsmittel sind Malonester, Acetessigester und β -Diketone.

Die blockierten Polyisocyanate werden hergestellt, indem man eine ausreichende Menge eines Alkohols mit dem organischen Polyisocyanat umsetzt, so daß keine freien Isocyanatgruppen mehr vorhanden sind.

Für den Fall, daß die erfindungsgemäß eingesetzte Basisbeschichtungszusammensetzung ein blockiertes Polyisocyanat enthält, kann sie vorteilhaft zusätzlich ein wasserverdünnbares Polyesterharz und/oder ein wasserverdünnbares Polyacrylatharz enthalten, wobei der Anteil an Polyisocyanat, Polyesterharz und/oder Polyacrylatharz insgesamt 1 bis 80 Gew.-%, bezogen auf den Festkörpergehalt der Polyurethandispersion, beträgt.

Die erfindungsgemäß eingesetzten Basisbeschichtungszusammensetzungen können alle bekannten und in der Lackindustrie üblichen Pigmente oder Farbstoffe enthalten.

Als Farbstoffe bzw. Pigmente, die anorganischer oder organischer Natur sein können, werden beispielsweise genannt Titandioxid, Graphit, Ruß, Zinkchromat, Strontiumchromat, Bariumchromat, Bleichromat, Bleicyanamid, Bleisilicochromat, Zinkoxid, Cadmiumsulfid, Chromoxid, Zinksulfid, Nickeltitangelb, Chromtitangelb, Eisenoxidrot, Eisenoxidschwarz, Ultramarinblau, Phthalocyaninkomplexe, Naphtholrot, Chinacridone und halogenierte Thioindigo-Pigmente.

Als besonders bevorzugte Pigmente werden Metallpulver einzeln oder im Gemisch wie Kupfer, Kupferlegierungen, Aluminium und Stahl, vorzugsweise Aluminiumpulver, in wenigstens überwiegendem Anteil eingesetzt, und zwar in einer Menge von 0,5 bis 25 Gew.-%, bezogen auf den gesamten Festkörpergehalt der Überzugsmittel, an Bindemitteln. Als metallische Pigmente werden solche handelsüblichen Metallpulver bevorzugt, die für wäßrige Systeme speziell vorbehandelt sind.

Die Metallpulver können auch zusammen mit einem oder mehreren der obengenannten nichtmetallischen Pigmente bzw. Farbstoffe eingesetzt werden. In diesem Fall wird deren Anteil so gewählt, daß der erwünschte Metallic-Effekt nicht unterdrückt wird.

Die erfindungsgemäß eingesetzten Basisbeschichtungszusammensetzungen können auch weitere übliche Zusätze wie Lösungsmittel, Füllstoffe, Weichmacher, Stabilisatoren, Netzmittel, Dispergierhilfsmittel, Verlaufmittel, Entschäumer und Katalysatoren einzeln oder im Gemisch in den üblichen Mengen enthalten. Diese Substanzen können den Einzelkomponenten und/oder der Gesamtmischung zugesetzt werden.

Geeignete Füllstoffe sind z.B. Talkum, Glimmer, Kaolin, Kreide, Quarzmehl, Asbestmehl, Schiefermehl, Bariumsulfat, verschiedene Kieselsäuren, Silikate, Glasfasern und organische Fasern.
Die oben beschriebenen Beschichtungszusammensetzungen werden erfindungsgemäß in Verfahren zur Herstellung von mehrschichtigen Überzügen auf Substratoberflächen verwendet, bei welchen
(1) als Basisbeschichtungszusammensetzung eine wäßrige Dispersion aufgebracht wird
(2) aus der in Stufe (1) aufgebrachten Zusammensetzung ein Polymerfilm auf der Substratoberfläche gebildet wird
(3) auf der so erhaltenen Basisschicht eine geeignete transparente Deckschichtzusammensetzung aufgebracht und anschließend
(4) die Basisschicht zusammen mit der Deckschicht eingebrannt wird.

Als Deckschichtzusammensetzungen sind grundsätzlich alle bekannten nicht oder nur transparent pigmentierten Überzugsmittel geeignet. Hierbei kann es sich um konventionelle lösungsmittelhaltige Klarlacke, wasserverdünnbare Klarlacke oder Pulverklarlacke handeln.

Als zu beschichtende Substrate kommen vor allem vorbehandelte Metallsubstrate in Frage, es können aber auch nicht vorbehandelte Metalle und beliebige andere Substrate wie zum Beispiel Holz oder Kunststoffe unter Verwendung der erfindungsgemäß einzusetzenden Basisbeschichtungszusammensetzungen mit einer mehrschichtigen schützenden und/oder dekorativen Beschichtung überzogen werden.

Die Erfindung wird in den folgenden Beispielen näher erläutert. Alle Angaben über Teile und Prozentsätze sind Gewichtsangaben, falls nicht ausdrücklich etwas anderes festgestellt wird.

### Herstellung einer erfindungsgemäß einzusetzenden Polyurethandispersion

255 g eines Polyesters aus Hexandiol-1,6 und Isophthalsäure mit einem mittleren Molekulargewicht von 614, werden zusammen mit 248 g eines Polypropylenglykols mit einem mittleren Molekulargewicht von 600 und mit 100 g Dimethylolpropionsäure auf 100°C erhitzt und 1 Stunde im Vakuum entwässert. Bei 80°C werden 526 g 4,4'-Dicyclohexylmethandiisocyanat und 480 g Methylethylketon zugegeben. Es wird bei 80°C so lange gerührt, bis der Gehalt an freien Isocyanatgruppen 1,69 %, bezogen auf die Gesamteinwaage, beträgt.

Jetzt werden 28,5 g Trimethylolpropan und anschließend 0,4 g Dibutylzinndilaurat zugegeben und 2 Stunden bei 80°C weiter gerührt. Nach Zugabe von 1590 g Methylethylketon wird so lange bei 80°C gehalten, bis die Viskosität, gemessen im DIN-Becher, 65 s beträgt (Probe im Verhältnis 2:3 in N-Methylpyrrolidon gelöst).

Nach Zugabe einer Mischung aus 22,4 g Dimethylethanolamin und 2650 g deionisiertem Wasser wird im Vakuum das Methylethylketon abdestilliert, und man erhält eine feinteilige Dispersion mit einem Festkörpergehalt von 30 %, einem pH-Wert von 7,4 und einer Viskosität von 48 s, gemessen im DIN-Becher.

### Herstellung von Zweischicht-Lackierungen nach dem Base-Coat-/Clear-Coat-Verfahren unter Verwendung der nach obiger Vorschrift hergestellten erfindungsgemäß einzusetzenden Polyurethandispersion

Die Herstellung der Zweischichtlackierung erfolgte nach den in der US-A 4, 558, 090 angegebenen experimentellen Angaben.

Ein unter Verwendung der erfindungsgemäß einzusetzenden Polyurethandispersion hergestellter Metalleffekt-Basislack konnte zu einer qualitativ hochwertigen zweischichtigen Metalleffektlackierung mit einem ausgezeichneten Metalleffekt verarbeitet werden.

Die Entfernbarkeit von in den Applikationsgeräten zurückgebliebenen Lackresten wird anhand der folgenden Vergleichsversuche demonstriert: Auf einer Glasplatte wurde ein Metalleffekt-Basislack gemäß der US-A 4,558,090 und ein Metalleffekt-Basislack gemäß der vorliegenden Erfindung in einer Naßfilmdicke von 100 µm mit Hilfe eines Rakels aufgetragen.

Nach 2stündigem Trocknen bei Raumtemperatur wurde mit einer Mischung auf 50 Teilen Wasser und 50 Teilen n-Propanol versucht, den angetrockneten Lackfilm von der Glasplatte zu entfernen. Dazu wurde ein mit dieser Reinigungsmischung getränkter Pinsel mit leichtem Druck in kreisenden Bewegungen über den getrockneten Lackfilm geführt. Der aus dem erfindungsgemäß hergestellten Metalleffekt-Basislack gebildete Lackfilm löste sich schon nach den ersten Kreisbewegungen homogen auf. Der unter Verwendung der in der US 4,558,090 offenbarten Dispersion hergestellte Lackfilm dagegen quoll zunächst auf und löste sich erst nach vielfachen Kreisbewegungen in größeren zusammenhängenden Fladen vom Untergrund ab.

Dieser Versuch wurde mit einer Vielzahl unterschiedlichster Lösungsmittel bzw. Lösungsmittelgemische wiederholt. In allen Fällen wurden ähnliche Ergebnisse erhalten.

## Patentansprüche

1. Verfahren zur Herstellung eines mehrschichtigen, schützenden und/oder dekorativen Überzuges auf einer Substratoberfläche, bei welchem
(1) als Basisbeschichtungszusammensetzung eine wäßrige Dispersion aufgebracht wird, die
a) als filmbildendes Material mindestens ein unvernetztes Polyurethanharz mit einer Säurezahl von 5 bis 70, welches hergestellt worden ist, indem aus
(A) linearen Polyether- und/oder Polyesterdiolen mit einem Molekulargewicht von 400 bis 3000,
(B) Diisocyanaten und
(C) Verbindungen, die zwei gegenüber Isocyanatgruppen reaktive Gruppen enthalten, wobei zumindest ein Teil der als Komponente (C) eingesetzten Verbindungen mindestens eine zur Anionenbildung befähigte Gruppe aufweist, die vorzugsweise vor der Umsetzung mit einem tertiären Amin neutralisiert worden ist,
ein endständige Isocyanatgruppen aufweisendes Zwischenprodukt hergestellt worden ist, dessen freie Isocyanatgruppen anschließend mit
(D) weiteren, gegenüber Isocyanatgruppen reaktive Gruppen enthaltenden Verbindungen
umgesetzt worden sind,
b) Pigmente und
c) weitere übliche Additive
enthält,
(2) aus der in Stufe (1) aufgebrachten Zusammensetzung ein Polymerfilm auf der Oberfläche gebildet wird,
(3) auf der so erhaltenen Basisschicht eine geeignete transparente Deckschichtzusammensetzung aufgebracht und anschließend die Basisschicht zusammen mit der Deckschicht eingebrannt wird,
dadurch gekennzeichnet, daß
die die Basisbeschichtungszuammensetzung bildende Polyurethandispersion durch eine Umsetzung des aus (A), (B) und (C) erhaltenen Zwischenproduktes mit einem mindestens drei Hydroxylgruppen enthaltenden Polyol, vorzugsweise Triol, und Überführung des so gewonnenen Reaktionsproduktes in die wäßrige Phase hergestellt worden ist.

2. Verfahren nach Anspruch 1
dadurch gekennzeichnet, daß
die Umsetzung des aus (A), (B) und (C) erhaltenen Zwischenproduktes mit dem Polyol in einem wassermischbaren, unter 100°C siedenden, gegenüber Isocyanatgruppen inerten und aus wäßrigen Mischungen gut abtrennbaren organischen Lösungsmittel, bevorzugt Aceton, durchgeführt worden ist.

3. Verfahren nach Anspruch 1 oder 2
dadurch gekennzeichnet, daß
das aus (A), (B) und (C) erhaltene Zwischenprodukt mit Trimethylolpropan umgesetzt worden ist.

4. Verfahren nach einem der Ansprüche 1 bis 3,
dadurch gekennzeichnet, daß
die Basisbeschichtungszusammensetzung ein wasserverdünnbares Melaminharz in einem Anteil von 1 bis 80 Gew.-%, bevorzugt 20 bis 60 Gew.-%, bezogen auf den Festkörpergehalt der Polyurethandispersion, enthält.

5. Verfahren nach Anspruch 4,
dadurch gekennzeichnet, daß
die Basisbeschichtungszusammensetzung ein wasserverdünnbares Polyesterharz und/oder ein wasserverdünnbares Polyacrylatharz enthält, wobei das Gewichtsverhältnis Melaminharz zu Polyesterharz und/oder Polyacrylatharz 2:1 bis 1:4 beträgt und der Gesamtanteil an Melaminharz, Polyester und Polyacrylatharz, bezogen auf den Festkörpergehalt der Polyurethandispersion, 1 bis 80 Gew.-%, bevorzugt 20 bis 60 Gew.-%, beträgt.

6. Verfahren nach einem der Ansprüche 1 bis 5,
dadurch gekennzeichnet, daß
die Basisbeschichtungszusammensetzung ein blockiertes Polyisocyanat zusammen mit einem wasserverdünnbaren Polyesterharz und/oder einem wasserverdünnbaren Polyacrylatharz enthält, wobei der Anteil an Polyisocyanat, Polyesterharz und/oder Polyacrylatharz insgesamt 1 bis 80 Gew.-%, bezogen auf den Festkörpergehalt der Polyurethandispersion, beträgt.

7. Verfahren nach einem der Ansprüche 1 bis 6,
dadurch gekennzeichnet, daß
die Basisbeschichtungszusammensetzung 0,5 bis 25 Gew.-% Metallpigmente, bezogen auf den gesamten Festkörpergehalt der Polyurethandispersion, enthält.

8. Verwendung von wäßrigen Dispersionen, die
a) als filmbildendes Material mindestens ein unvernetztes Polyurethanharz mit einer Säurezahl von 5 bis 70, welches hergestellt worden ist, indem aus
(A) linearen Polyether- und/oder Polyesterdiolen mit einem Molekulargewicht von 400 bis 3000,
(B) Diisocyanaten und
(C) Verbindungen, die zwei gegenüber Isocyanatgruppen reaktive Gruppen enthalten, wobei zumindest ein Teil der als Komponente (C) eingesetzten Verbindungen mindestens eine zur Anionenbildung befähigte Gruppe aufweist, die vorzugsweise vor der Umsetzung mit einem tertiären Amin neutralisiert worden ist,
ein endständige Isocyanatgruppen aufweisendes Zwischenprodukt hergestellt worden ist, dessen freie Isocyanatgruppen anschließend mit einem mindestens drei Hydroxylgruppen enthaltenden Polyol, vorzugsweise Triol, umgesetzt worden sind,
b) Pigmente und
c) weitere übliche Additive
enthalten, als Basisbeschichtungszusammensetzungen für die Herstellung von mehrschichtigen, schützenden und/oder dekorativen Überzügen auf Substratoberflächen, bei der
(1) die Basisbeschichtungszusammensetzung auf die Substratoberfläche aufgebracht wird
(2) aus der in Stufe (1) aufgebrachten Zusammensetzung ein Polymerfilm auf der Oberfläche gebildet wird
(3) auf der so erhaltenen Basisschicht eine geeignete transparente Deckbeschichtungszusammensetzung aufgebracht und anschließend die Basisschicht zusammen mit der Deckschicht eingebrannt wird.

9. Substrat, beschichtet mit einem mehrschichtigen, schützenden und/oder dekorativen Überzug, der erhalten worden ist, indem
(1) als Basisbeschichtungszusammensetzung eine wäßrige Dispersion aufgebracht worden ist, die
a) als filmbildendes Material mindestens ein unvernetztes Polyurethanharz mit einer Säurezahl von 5 bis 70, welches hergestellt worden ist, indem aus
(A) linearen Polyether und/oder Polyesterdiolen mit einem Molekulargewicht von 400 bis 3000,
(B) Diisocyanaten und
(C) Verbindungen, die zwei gegenüber Isocyanatgruppen reaktive Gruppen enthalten, wobei zumindest ein Teil der als Komponente (C) eingesetzten Verbindungen mindestens eine zur Anionenbildung befähigte Gruppe aufweist, die vorzugsweise vor der Umsetzung mit einem tertiären Amin neutralisiert worden ist,
ein endständige Isocyanatgruppen aufweisendes Zwischenprodukt hergestellt worden ist, dessen freie Isocyanatgruppen anschließend mit
(D) weiteren, gegenüber Isocyanatgruppen reaktive Gruppen enthaltenden Verbindungen umgesetzt worden sind,
(b) Pigmente und
(c) weitere übliche Additive
enthält,
(2) aus der in Stufe (1) aufgebrachten Zusammen setzung ein Polymerfilm auf der Oberfläche gebildet worden ist,
(3) auf der so erhaltenen Basisschicht eine geeignete transparente Deckschichtzusammensetzung aufgebracht worden ist und anschließend
(4) die Basisschicht zusammen mit der Deckschicht eingebrannt worden ist,
dadurch gekennzeichnet, daß
die die Basisbeschichtungszusammensetzung bildende wäßrige Polyurethandispersion durch eine Umsetzung des aus (A), (B) und (C) erhaltenen Zwischenproduktes mit einem mindestens drei Hydroxylgruppen enthaltenden Polyol, vorzugsweise Triol, und Überführung des so gewonnenen Reaktionsproduktes in eine wäßrige Phase hergestellt worden ist.

## Claims

1. Process for preparing a multilayered, protective and/or decorative coating on a substrate surface by
(1) applying a basecoating composition comprising an aqueous dispersion which contains
a) as film-forming material one or more uncrosslinked polyurethane resins having an acid number of from 5 to 70, which has been prepared by preparing from
(A) linear polyetherdiols and/or polyesterdiols having a molecular weight of from 400 to 3,000,
(B) diisocyanates and
(C) compounds which contain two groups which are reactive toward isocyanate groups, one or more of the compounds used as component C having one or more groups capable of anion formation which have preferably been neutralized before the reaction with a tertiary amine,
an intermediate which has terminal isocyanate groups and whose free isocyanate groups have subsequently been reacted with
(D) further compounds which contain groups reactive toward isocyanate groups,
(b) pigments and
(c) further customary additives,
(2) forming from the composition applied in stage (1) a polymer film on the surface,
(3) applying to the basecoat thus obtained a suitable transparent topcoat composition and then baking the basecoat together with the topcoat.
characterized in that the polyurethane dispersion forming the basecoating composition has been prepared by reacting the intermediate obtained from (A), (B) and (C) with a polyol which contains three or more hydroxyl groups, preferably a triol, and transferring the reaction product thus obtained into the aqueous phase.

2. Process according to Claim 1, characterized in that the reaction of the intermediate obtained from (A), (B) and (C) with the polyol has been carried out in a water-miscible organic solvent, preferably acetone, which boils below 100°C, is inert toward isocyanate groups and is readily separable from aqueous mixtures.

3. Process according to Claim 1 or 2, characterized in that the intermediate obtained from (A), (B) and (C) has been reacted with trimethylolpropane.

4. Process according to any one of Claims 1 to 3, characterized in that the basecoating composition contains a water-dilutable melamine resin in an amount from 1 to 80% by weight, preferably from 20 to 60% by weight, based on the solids content of the polyurethane dispersion.

5. Process according to Claim 4, characterized in that the basecoating composition contains a water-dilutable polyester resin and/or a water-dilutable polyacrylate resin, the weight ratio of melamine resin: polyester resin and/or polyacrylate resin being from 2:1 to 1:4 and the total proportion of melamine resin, polyester resin and polyacrylate resin, based on the solids content of the polyurethane dispersion, ranging from 1 to 80% by weight, preferably from 20 to 60% by weight.

6. Process according to any one of Claims 1 to 5, characterized in that the basecoating composition contains a blocked polyisocyanate together with a water-dilutable polyester resin and/or a water-dilutable polyacrylate resin, the proportion of polyisocyanate, polyester resin and/or polyacrylate resin as a whole ranging from 1 to 80% by weight, based on the solids content of the polyurethane dispersion.

7. Process according to any one of Claims 1 to 6, characterized in that the basecoating composition contains from 0.5 to 25% by weight of metal pigments, based on the total solids content of the polyurethane dispersion.

8. Use of aqueous dispersions which contain
a) as film-forming material one or more uncrosslinked polyurethane resins having an acid number of from 5 to 70, which has been prepared by preparing from
(A) linear polyetherdiols and/or polyesterdiols having a molecular weight of from 400 to 3,000,
(B) diisocyanates and
(C) compounds which contain two groups which are reactive toward isocyanate groups, one or more of the compounds used as component C having one or more groups capable of anion formation which have preferably been neutralized before the reaction with a tertiary amine,
an intermediate which has terminal isocyanate groups and whose free isocyanate groups have subsequently been reacted with a polyol which contains three or more hydroxyl groups, preferably a triol,
(b) pigments and
(c) further customary additives,
as basecoating compostitions for the preparation of multilayered, protective and/or decorative coatings on substrate surfaces.
by
(1) applying the basecoating composition to the substrate surface
(2) forming from the composition applied in stage (1) a polymer film on the surface,
(3) applying to the basecoat thus obtained a suitable transparent topcoat composition and subsequently baking the basecoat together with the topcoat.

9. Substrate coated with a multilayered, protective and/or decorative coating which has been obtained by
(1) applying as a basecoating composition an aqueous dispersion which contains
a) as film-forming material one or more uncrosslinked polyurethane resins having an acid number of from 5 to 70, which has been prepared by preparing from
(A) linear polyetherdiols and/or polyesterdiols having a molecular weight of from 400 to 3,000
(B) diisocyanates and
(C) compounds which contain two groups which are reactive toward isocyanate groups, one or more of the compounds used as component C having one or more groups capable of anion formation which have preferably been neutralized before the reaction with a tertiary amine,
an intermediate which has terminal isocyanate groups and whose free isocyanate groups have subsequently been reacted with
(D) further compounds which contain groups reactive toward isocyanate groups,
(b) pigments and
(c) further customary additives,
(2) forming from the composition applied in stage (1) a polymer film on the surface,
(3) applying to the basecoat thus obtained a suitable transparent topcoat composition and then
(4) baking the basecoat together with the topcoat, characterized in that the polyurethane dispersion forming the basecoating composition has been prepared by reacting the intermediate obtained from (A), (B) and (C) with a polyol which contains three or more hydroxyl groups, preferably a triol, and transferring the reaction product thus obtained into an aqueous phase.

## Revendications

1. Procédé de préparation d'un revêtement multicouche protecteur et/ou décoratif sur une surface de substrat, par lequel :
(1) une dispersion aqueuse est déposée comme composition d'enduction de base, qui contient :
a) au moins une résine de polyuréthanne non réticulée comme matière filmogène avec une teneur en acide de 5 à 70, laquelle est préparée à partir :
(A) de polyéther- et/ou de polyesterdiols linéaires avec un poids moléculaire de 400 à 3000,
(B) de diisocyanates, et
(C) de composés qui contiennent deux radicaux réactifs avec des radicaux isocyanate, et au moins une partie des composé introduits comme composant (C) présente au moins un radical capable de former un anion, qui est, de préférence, neutralisé par réaction avec une amine tertiaire, pour former un produit intermédiaire présentant des radicaux isocyanate terminaux, ces radicaux isocyanate libres réagissent ensuite avec :
(D) d'autres composés contenant des radicaux réactifs avec des isocyanates,
b) un pigment, et
c) d'autres additifs classiques,
(2) sur la composition déposée à l'étape (1), une pellicule polymère est formée sur la surface,
(3) sur la couche de base ainsi obtenue, une composition de protection transparente appropriée est déposée et ensuite, la couche de base et la couche de protection sont cuites,
caractérisé en ce que :
la dispersion polyuréthanne formant la composition d'enduction de base est préparée par réaction du produit intermédiaire contenant (A), (B) et (C) avec un polyol contenant au moins trois radicaux hydroxyle, de préférence, un triol, et conversion du produit de réaction ainsi obtenu en une phase aqueuse.

2. Procédé suivant la revendication 1, caractérisé en ce que la réaction du produit intermédiaire contenant (A), (B) et (C) avec le polyol est réalisée dans un solvant organique miscible à l'eau, de point d'ébullition inférieur à 100°C, inerte par rapport aux radicaux isocyanate et bien séparable d'une solution aqueuse, de préférence l'acétone.

3. Procédé suivant la revendication 1 ou 2, caractérisé en ce que le produit intermédiaire contenant (A), (B) et (C) est mis à réagir avec du triméthylolpropane.

4. Procédé suivant l'une quelconque des revendications 1 à 3, caractérisé en ce que la composition d'enduction de base contient une résine mélamine dispersible dans l'eau en une quantité de 1 à 80% en poids, de préférence 20 à 60% en poids sur base de la teneur en matière solide de la dispersion polyuréthanne.

5. Procédé suivant la revendication 4, caractérisé en ce que la composition d'enduction de base contient une résine polyester dispersible dans l'eau et/ou une résine polyacrylate dispersible dans l'eau, où la proportion en poids de résine mélamine à la résine polyester et/ou résine polyacrylate atteint 2:1 à 1:4 et la quantité totale de résine mélamine, résine polyester et polyacrylate, sur base de la teneur en matière solide de la dispersion polyuréthanne, atteint 1 à 80% en poids, de préférence 20 à 60% en poids.

6. Procédé suivant l'une quelconque des revendications 1 à 5, caractérisé en ce que la composition d'enduction de base contient un polyisocyanate bloqué avec une résine polyester dispersible dans l'eau et/ou une résine polyacrylate dispersible dans l'eau, où la quantité totale de polyisocyanate, résine polyester et/ou résine polyacrylate atteint 1 à 80% en poids, sur base de la teneur en matière solide de la dispersion polyuréthanne.

7. Procédé suivant l'une quelconque des revendications 1 à 6, caractérisé en ce que la composition d'enduction de base contient 0,5 à 25% en poids de pigment métallique, sur base de la teneur en matière solide totale de la dispersion polyuréthanne.

8. Utilisation d'une dispersion aqueuse, qui contient :
a) comme matière filmogène, au moins une résine polyuréthanne non réticulée avec une teneur en acide de 5 à 70, laquelle est préparée par réaction :
(A) de polyéther- et/ou de polyesterdiols linéaires avec un poids moléculaire de 400 à 3000,
(B) de diisocyanates, et
(C) de composés qui contiennent deux radicaux réagissant avec les radicaux isocyanate, où au moins une partie du composé utilisé comme composant (C) présente au moins un radical capable de former un anion, qui est, de préférence, neutralisé par réaction avec une amine tertiaire, pour former un produit intermédiaire présentant des radicaux iscoyanate terminaux, ces radicaux isocyanate terminaux sont ensuite mis à réagir avec un polyol contenant au moins trois radicaux hydroxyle, de préférence un triol,
b) un pigment, et
c) d'autres additifs habituels, comme composition d'enduction de base pour la préparation d'un revêtement multicouche protecteur et/ou décoratif sur la surface d'un substrat par :
(1) dépôt de la composition d'enduction de base sur le substrat,
(2) sur la composition déposée àl'étape (1), une pellicule polymère est formée sur la surface,
(3) sur la couche de base ainsi obtenue, une composition de revêtement de protection transparente appropriée est déposée et ensuite, la couche de base et la couche de protection sont cuites

9. Substrat, enduit d'un revêtement multicouche protecteur et/ou décoratif, qui peut être obtenu par :
(1) dépôt d'une dispersion aqueuse comme composition d'enduction de base, qui contient :
a) comme matière filmogène, au moins une résine polyuréthanne non réticulée avec une teneur en acide de 5 à 70, laquelle est préparée par obtention d'un produit intermédiaire présentant des radicaux isocyanate terminaux au moyen :
(A) de polyéther- et/ou de polyesterdiols linéaires avec un poids moléculaire de 400 à 3000,
(B) de diisocyanates, et
(C) de composés qui contiennent deux radicaux réactifs avec des radicaux isocyanate, où au moins une partie du composé utilisé comme composant (C) présente au moins un radical susceptible de former un anion, qui peut être neutralisé, de préférence, par réaction avec une amine tertiaire, les radicaux isocyanate terminaux sont ensuite mis à réagir avec :
(D) d'autres composés contenant des radicaux réactifs avec des isocyanates,
b) un pigment, et
c) d'autres additifs habituels,
(2) sur la composition déposée à l'étape (1), une pellicule polymère est formée sur la surface,
(3) sur la couche de base ainsi obtenue, une composition de revêtement de protection transparente appropriée est déposée et, ensuite
(4) la couche de base et la couche de protection sont cuites,
caractérisé en ce que la dispersion polyuréthanne aqueuse formée de la composition d'enduction de base est préparée par réaction d'un produit intermédiaire contenant (A), (B) et (C) avec un polyol contenant au moins trois radicaux hydroxyle, de préférence un triol, et conversion du produit de réaction ainsi obtenu en une phase aqueuse.
